# EUROPÄISCHE PATENTSCHRIFT

(11) **EP 3 033 555 B1**
(45) Veröffentlichungstag und Bekanntmachung des Hinweises auf die Patenterteilung: **05.04.2017**
(21) Anmeldenummer: 14745076.1
(22) Anmeldetag: 21.07.2014
(51) Int. Cl.: C03B 9/40, F16K 31/60, F16K 35/00, F16K 31/02, G06F 3/16, G06F 3/01, G06F 3/03

(54) **VENTILBAUGRUPPE FÜR EINE I.S.-MASCHINE**
VALVE ASSEMBLY FOR AN I.S. MACHINE
ENSEMBLE DE VANNE POUR UNE I.S. MACHINE

(30) Priorität: 12.08.2013 DE 102013013312
(43) Veröffentlichungstag der Anmeldung: 22.06.2016
(73) Patentinhaber: Heye International GmbH, 31683 Obernkirchen (DE)
(72) Erfinder: LUNACEK, Matthias, 31683 Obernkirchen (DE); FELGENHAUER, Benedikt, 32049 Herford (DE); WINKLER, Michael, 31737 Rinteln (DE); WINKELHAKE, Dirk, 31688 Nienstädt (DE); BUSCHMANN, Kai, 31698 Lindhorst (DE); SEIDENSTICKER, Wilfried, 31683 Obernkirchen (DE); JOCHENS, Markus, 31737 Rinteln (DE); HARTMANN, Thomas, 31675 Bückeburg (DE)
(74) Vertreter: Kramm, Dagmar
(86) Internationale Anmeldenummer: PCT/EP2014/001975
(87) Internationale Veröffentlichungsnummer: WO 2015/022046

(56) Entgegenhaltungen:
- US-A- 2 946 347
- US-A- 2 965 133
- US-A- 6 155 290
- US-A1- 2008 078 455

## Beschreibung

Die Erfindung bezieht sich auf eine Ventilbaugruppe entsprechend dem Oberbegriff des Anspruchs 1.

Aus der US 2008/0078455 A1 ist eine zum Notfall-Abschalten bestimmte Ventilbaugruppe bekannt" welche in einer Notfallsituation zum automatischen Abschalten von Ventilen eingerichtet ist, und zwar unmittelbar zum Öffnen bzw. Schließen von Leitungsventilen für Öl oder Gas auf einer Bohrplattform. Hierbei wird durch Federkraft eine Schaltbewegung eines Ventilschiebers in einer Pipeline ausgelöst, so dass für die Durchführung des Schaltvorgangs ein beträchtlicher Energiebedarf besteht.

Es ist im Hause der Anmelderin bekannt, zur pneumatischen Betätigung beispielsweise der Schließmechanismen der Vor- und Fertigformen einer I.S.-Maschine Ventilbaugruppen einzusetzen, die sämtlich auf einem Ventilblock montiert sind, der seinerseits unter Zwischenanordnung einer Adapterplatte mit einem Maschinenrahmen in Verbindung steht. Jede der Ventilanordnungen besteht aus einem zwei Schaltpatronen aufnehmenden Patronenträger, die jeweils über ein wahlweise elektrisch oder manuell betätigbares Vorsteuerventil ansteuerbar sind. Die zur Ansteuerung von durch die Schaltpatronen dargestellten Schaltventilen eingerichteten Vorsteuerventile steuern die Bewegung der jeweiligen Formhälften, wobei Sicherheitsventile im Falle einer über die Adapterplatte geführten separaten Arbeitslufteinspeisung zwischen dieser und einem Luftverteiler bzw. ohne separate Arbeitslufteinspeisung durch ein sonstiges externes Ventil gebildet worden sind. Eine spurweise, das heißt auf eine einzelne Ventilbaugruppe beschränkte Unterbrechung der Steuerluft ist hierbei nicht vorgesehen, wobei eine Ausrüstung weiterer Spuren mit voneinander unabhängigen Sicherheitsventilen mit einem erhöhten Platzbedarf für deren Unterbringung verbunden und in vielen Fällen bereits aus räumlichen Gründen nicht bzw. kaum darstellbar ist.

Ein vergleichbares Problem besteht in Verbindung mit der Steuerung der anderen Mechanismen der I.S.-Maschine zugeordneten, ebenfalls auf dem Ventilblock montierten Ventilbaugruppen.

Im Zuge von hinsichtlich der Arbeitssicherheit zukünftig zu erwartenden verschärften gesetzlichen Vorgaben ist die Notwendigkeit entstanden, eine größere Anzahl von Spuren mit einem Sicherheitsventil ausrüsten, eine Forderung, die mit der herkömmlichen Technik insbesondere aus Platzgründen häufig kaum erfüllbar ist.
Jedoch auch aus steuerungstechnischer Hinsicht ist eine Kaskade bestehend aus einem das Vorsteuerventil ansteuernden elektrischen Signals, welches seinerseits das Schaltventil betätigt und über ein externes Sicherheitsventil den jeweiligen Schließmechanismus erreicht, nicht wünschenswert.

Es ist somit die Aufgabe der Erfindung, eine Ventilbaugruppe der eingangs bezeichneten Art mit Hinblick auf die spurweise Darstellung der Funktion eines Sicherheitsventils auszugestalten, und zwar insbesondere unter Wahrung einer kompakten, raumsparenden Bauweise. Gelöst ist diese Aufgabe bei einer solchen Ventilbaugruppe durch die Merkmale des Kennzeichnungsteils des Anspruchs 1.

Erfindungswesentlich ist hiernach, dass ein Ventilträger, somit eine Baugruppe, an der bzw. in der wenigstens ein Vorsteuerventil und ein Arbeitsventil angeordnet sind, zusätzlich zur Anbringung eines Sicherheitsventils eingerichtet wird. Auf diese Weise ergibt sich eine modulartig handhabbare Ventilbaugruppe, die sich durch einen hohen Integrationsgrad auszeichnet, da sämtliche, einen Bewegungsmechanismus betreffenden Steuerungs- und Sicherungsfunktionen in einer Baugruppe zusammengefasst sind. Dies ermöglicht eine spurweise Ausrüstung auch mit Sicherheitsventilen, ohne dass hierzu in einem relevanten Maße zusätzliches Bauvolumen benötigt wird. Insbesondere können bestehende I.S.-Maschinen unter Verwendung dieser Ventilbaugruppen in einfacher Weise zwecks Erfüllung zukünftiger gesetzlicher Auflagen betreffend die Arbeitssicherheit ohne größeren Aufwand nachgerüstet werden.

Das in den Ventilträger integrierte Sicherheitsventil besteht aus einem Schaft, der in einer Bohrung gleitfähig aufgenommen ist, wobei eine Öffnungs- und eine Schließstellung durch die Verschiebeposition des Schaftes innerhalb dieser Bohrung darstellbar sind. Für die konstruktive Darstellung dieser Stellungen ergibt sich eine einfache Lösung durch einen, in die Oberfläche des genannten Schaftes eingearbeiteten, axial begrenzten Ringraum, über welchen in Verbindung mit seitlichen Bohrungen eine durchgängige Verbindung im Sinne einer Schließ- oder Öffnungsstellung einfach darstellbar ist.

Das Sicherheitsventil befindet sich in dem Strömungspfad der Steuerluft zwischen einem Vorsteuerventil und einem Schaltventil. Ohne Ansteuerung bleibt die jeweils letzte Position des Schaltventils, welches unmittelbar beispielsweise zur Steuerung der Bewegung des Schließzy-linders einer Vor- oder Fertigform eingesetzt ist, unverändert. Die für die Strömungs-führung der Steuerluft erforderlichen Bohrungen sind ohne weiteres innerhalb des Ventilkörpers unterbringbar.

Der Öffnungs- und der Schließbewegung eines Bewegungsmechanismus ist jeweils ein Schaltventil zugeordnet, wobei beispielsweise dessen jeweils verbleibende, das heißt ohne einen Bewegungsbezug eingerichtete Schaltstellung durch Federkraft gesichert ist. Im Regelfall sind somit in einer Ventilbaugruppe, insbesondere einem Ventilträger zwei Schaltventile aufgenommen.

Der Ventilträger ist entsprechend den Merkmalen des Anspruchs 2 mit Schnittstellen zur Zu- und Abführung von Steuer und Arbeitsluft ausgerüstet, zu denen Schnittstellen zur elektrischen Anbindung an eine Maschinensteuerung hinzutreten. Der Ventilträger ist auf diese Weise im Bedarfsfall auch ohne weiteres als Baueinheit austauschbar, z. B. im Rahmen von Wartungs- oder Instandsetzungstätigkeiten.

Jedes Vorsteuerventil ist entsprechend den Merkmalen des Anspruchs 3 wahlweise elektrisch oder manuell steuerbar eingerichtet. Auf diese Weise ist ein hohes Maß an betrieblicher Flexibilität dargestellt.

Entsprechend den Merkmalen des Anspruchs 4 besteht jedes Schaltventil aus einer austauschbar innerhalb des Ventilträgers angeordneten Schaltpatrone, wobei als Schaltpatrone jede Funktionseinheit anzusehen ist, die bewegliche Teile zur Darstellung einer Schließ- sowie einer Öffnungsstellung aufweist und damit die Funktion eines Ventils erfüllen kann. Wesentlich in diesem Zusammenhang ist, dass die Schaltpatrone im Verschleißfall einfach austauschbar ist.

Zumindest die Öffnungs- oder die Schließstellung eines jeden Sicherheitsventils ist entsprechend den Merkmalen des Anspruchs 5 verriegelbar, so dass insoweit unbeabsichtigte, unter Umständen Unfallgefahren mit sich bringende Schaltvorgänge unterbunden werden können.

Gemäß den Merkmalen der Ansprüche 6 und 7 besteht der Ventilträger aus einem, einen zylindrischen Raum zur Aufnahme des / der Schaltpatronen aufweisenden Patronenträger, der stirnseitig durch einen Deckel bzw. ein Kopfteil verschlossen ist. Das vorzugsweise ebenfalls lösbar mit dem Patronenträger in Verbindung stehende Kopfteil kann gleichzeitig als Träger für ein Vorsteuer- und ein Sicherheitsventil dienen. Es ergibt sich auch in diesem Fall eine modulartig handhabbare Baugruppe, die alle Steuerungs- und Sicherungsfunktionen umfasst.

Die Merkmale der Ansprüche 8 bis 10 sind auf weitere vorteilhafte Ausgetaltungen sowohl des Sicherheitsventils als auch des Vorsteuerventils gerichtet. Man erkennt, dass mit der erfindungsgemäßen Ventilbaugruppe sämtliche Spuren einer I.S.-Maschine modular ausgerüstet werden können, so dass in jedem Fall zukünftige gesetzlich vorgegebene Standards bedient werden können.

Die Erfindung wird im Folgenden unter Bezugnahme auf das in den beiliegenden Zeichnungen schematisch wiedergegebene Ausführungsbeispiel näher erläutert werden. Es zeigen:
Fig. 1 eine perspektivische Ansicht der erfindungsgemäßen Ventilbaugruppe;
Fig. 2 eine Schnittansicht entsprechend einer Ebene II - II der Ventilbaugruppe gemäß Fig. 1 mit geöffneten Sicherheitsventilen;
Fig. 3 eine ebene Ansicht der Ventilbaugruppe gemäß Fig. 2 mit geschlossenen Sicherheitsventilen;
Fig. 4 eine Darstellung der Einbausituation der Ventilbaugruppe gemäß Fig. 1 in einem Vertikalschnitt;
Fig. 5 eine Darstellung der Einbausituation der Ventilgruppen gemäß Fig. 1 in einem teilweisen Horizontalschnitt.

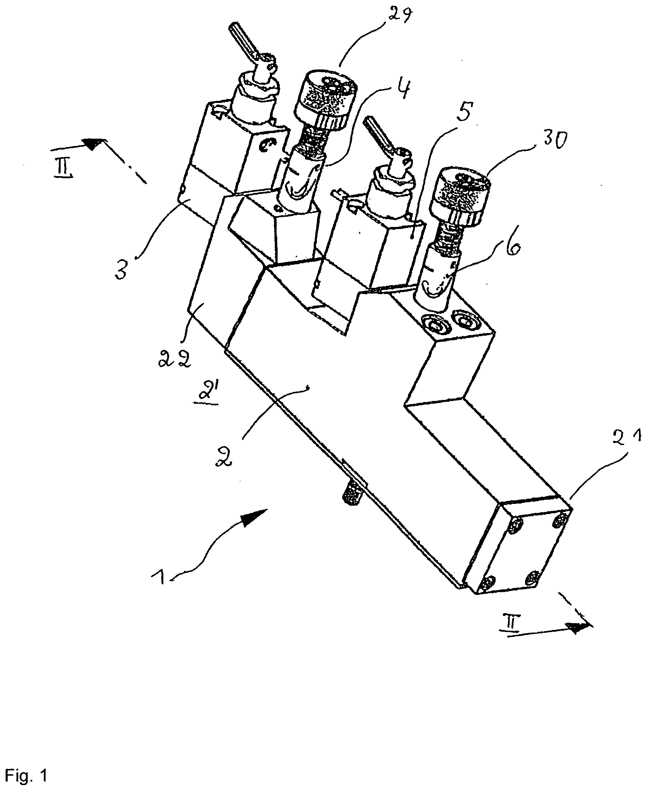

Fig. 1 zeigt eine Ventilbaugruppe 1 in ihrer Gesamtheit, welche aus einem, eine obere und eine untere Schaltpatrone aufnehmenden Patronenträger 2 besteht, der zusammen mit einem Deckelteil 22 einen modulartig handhabbaren Ventilträger 2' bildet, Der Ventilträger 2' trägt ein, einer oberen Schaltpatrone zugeordnetes Vorsteuerventil 3 nebst Sicherheitsventil 4 sowie ein der unteren Schaltpatrone zugeordneten Vorsteuerventil 5 nebst Sicherheitsventil 6. Die Funktion der beiden Schaltpatronen wird im Folgenden noch erläutert werden.

Diese Ventilbaugruppe 1 ist in einer im Folgenden noch zu erläuternden Weise dem zeichnerisch nicht dargestellten Bewegungsmechanismus der Vorform einer I.S.-Maschine zugeordnet und ist somit zur Steuerung der Öffnung und Schließung der Vorformhäften eingerichtet.

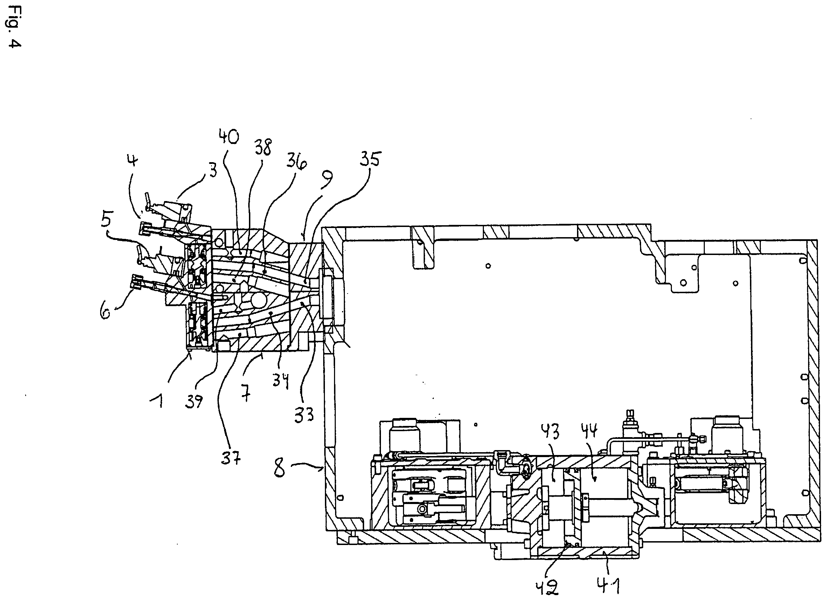

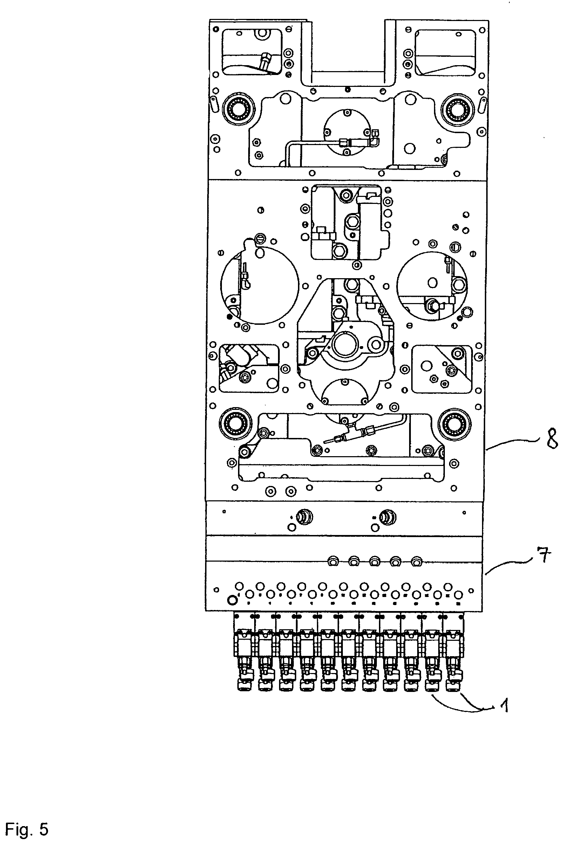

Wie die Figuren 4 und Fig. 5 im Einzelnen zeigen, steht die Ventilbaugruppe 1 im eingebauten Zustand über einen Ventilblock 7 mit dem Maschinenrahmen 8 der I.S.-Maschine in Verbindung, der zur Anbringung einer Vielzahl solcher Ventilbaugruppen 1 eingerichtet ist, die jeweils zur Steuerung eines bestimmten Bewegungsmechanismus bestimmt sind. Zwischen dem Maschinenrahmen 8 und dem Ventilblock 7 befindet sich eine Adapterplatte 9.

Es wird im Folgenden zunächst Bezug genommen auf die Zeichnungsfiguren 2 und 3, welche jeweils eine Ventilbaugruppe 1 mit unterschiedlichen Schaltstellungen der Sicherheitsventile 4, 6 zeigen.

Beide Vorsteuerventile 3, 5 sind wahlweise manuell über einen Handhebel 10, 11 oder elektrisch zwischen einer Öffnungs- und einer Schließstellung steuerbar.

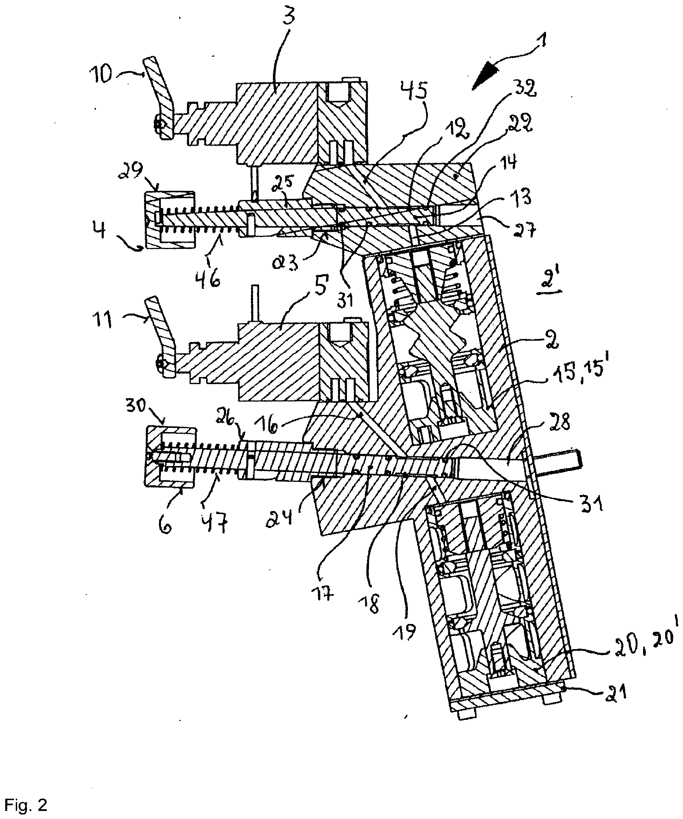

In der in Fig. 2 gezeigten Öffnungsstellung des Handschalthebels 10 gelangt Steuerluft über eine Bohrung 45, einen, einen Schaft 14 des Sicherheitsventils 4 umgebenden Ringraum 12 und eine weitere Bohrung 13 zu einer oberen Schaltpatrone 15, die ein Schaltventil 15' für Arbeitsluft bildet und zwischen einer ein Ausströmen von Arbeitsluft freigebenden und einer ein Ausströmen sperrenden Stellung schaltbar ist.

In gleicher Weise gelangt bei der gezeigten Öffnungsstellung des Handschalthebels 11 Steuerluft über eine Bohrung 16, einen, einen Schaft 17 des Sicherheitsventils 6 umgebenden Ringraum 18 und eine weitere Bohrung 19 zu einer unteren Schaltpatrone 20, die ein Schaltventil 20' für Arbeitsluft bildet und zwischen einer ein Ausströmen von Arbeitsluft freigebenden und einer ein Ausströmen von Arbeitsluft sperrenden Stellung schaltbar ist.

Mit 21 ist ein Deckel bezeichnet, mittels welchem der die Schaltpatronen 15, 20 aufnehmende Raum an seinem unteren Ende abgeschlossen ist. Die Bohrung 13 verläuft innerhalb eines Kopfteils 22, durch welches das obere Ende des genannten Raumes abgeschlossen ist und welches das Sicherheitsventil 4 sowie das Vorsteuerventil 3 trägt.

Für die Öffnungsbewegung und für die Schließbewegung hier der Vorform einer I.S.-Maschine ist jeweils eine Schaltpatrone 15, 20 vorgesehen. Als Schaltpatrone kann grundsätzlich jede Baueinheit eingesetzt werden, die eine bewegliche Struktur zur Darstellung der jeweiligen Öffnungs- bzw. der Schließstellung umfasst. Die beiden, durch die Schaltpatronen 15, 20 dargestellten Schaltventile 15', 20' befinden sich praktisch stets in entgegen gesetzten Schaltstellungen, so dass eine Öffnung des einen Schaltventils mit einer Schließung des anderen Schaltventils und umgekehrt verbunden ist. Jeweils eine Stellung dieser Schaltventile 15', 20' ist durch Federkraft gesichert.

Die beiden Sicherheitsventile 4, 6 sind untereinander gleich beschaffen und bestehen aus einer jeweils in eine Bohrung 23, 24 des Kopfteiles 22 sowie des Patronenträgers 2 eingeschraubten Führungsbuchse 25, 26, innerhalb welcher der jeweilige Schaft 14, 17 gleitfähig aufgenommen ist. Die Bohrungen sind innerhalb des Kopfteils 22 sowie des Patronenträgers 2 in weiteren sich koaxial erstreckenden Bohrungen 27, 28 fortgeführt.

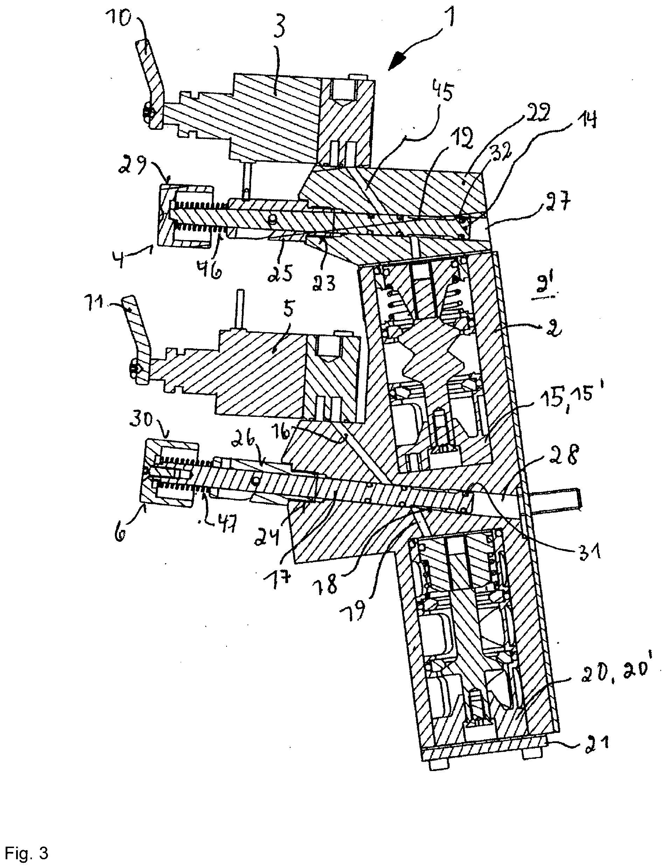

An den aus dem Kopfteil 22 sowie dem Patronenträger 2 herausragenden Enden der Schäfte 14, 17 befindet sich jeweils ein Schaltknopf 29, 30, der in Verbindung mit einer Feder 46, 47 und einem Verriegelungsmechanismus in der in Figur 2 dargestellten Öffnungsstellung, in der über den Ringraum 12, 18 des jeweiligen Schaftes 14, 17 eine durchgängige Verbindung zwischen den Bohrungen 45, 13 bzw. den Bohrungen 16, 19 hergestellt ist, und der in Fig. 3 dargestellten Schließstellung, in der diese Verbindung gesperrt ist, verriegelbar ist.

Mit 31, 32 sind Dichtringe bezeichnet, über welche der genannte Ringraum in axialer Richtung beidseitig abgedichtet ist.

Mit 33 ist eine Bohrung 34 des Ventilblocks 7 fortführende Bohrung bezeichnet, die der Zufuhr von Arbeitsluft zu einem Bewegungsmechanismus sowie der Abfuhr von Arbeitsluft von dem Bewegungsmechanismus in Verbindung mit der unteren Schaltpatrone 20 der Ventilbaugruppe 1 dient.

Mit 35 ist eine in einer Bohrung 36 des Ventilblocks 7 fortgeführte Bohrung bezeichnet, die der Zufuhr von Arbeitsluft zu einem Bewegungsmechanismus sowie der Abfuhr von Arbeitsluft von dem Bewegungsmechanismus in Verbindung mit der oberen Schaltpatrone 15 der Ventilbaugruppe 1 dient.

Mit 37 ist eine Bohrung innerhalb des Ventilblocks 7 bezeichnet, die der zentralen Zuführung von Arbeitsluft zu der Ventilbaugruppe 1 dient, und zwar zu der unteren Schaltpatrone 20.

Mit 38 ist eine Bohrung innerhalb des Ventilblocks 7 bezeichnet, die der zentralen Zuführung von Arbeitsluft zu der Ventilbaugruppe 1 dient, und zwar zu der oberen Schaltpatrone 15.

Mit 39 ist eine Bohrung innerhalb des Ventilblocks 7 bezeichnet, die zur Führung von Abluft der unteren Schaltpatrone 20 bestimmt ist.

Mit 40 ist eine Bohrung innerhalb des Ventilblocks 7 bezeichnet, die zur Führung von Abluft der oberen Schaltpatrone 15 bestimmt ist.

Steuerluft wird durch den Ventilblock 7 mit der Maßgabe geführt, dass die Beaufschlagung des einen Schaltventils15', 20' in Richtung auf eine Öffnungsstellung hin stets die Beaufschlagung des anderen Schaltventils in Richtung auf eine Schließstellung hin auslöst.

Arbeitsluft wird über einen für alle Ventilbaugruppen 1 eines Ventilblocks 7 gemeinsamen Arbeitsluftkanal eingespeist oder alternativ extern der Ventilbaugruppe 1 zugeführt.

Die Sicherheitsventile 4, 6 befinden sich in dem die Steuerluft führenden Pfad zwischen den Vorsteuerventilen 3, 5 und den durch die Schaltpatronen 15, 20 dargestellten Schaltventilen.

Lediglich beispielhaft für einen mittels der Ventilbaugruppe 1 zu betätigenden Bewegungsmechanismus ist in Fig. 4 der Schließzylinder 41 einer zeichnerisch nicht dargestellten Vorform bezeichnet. In diesem befindet sich ein mit den zu steuernden Vorformhälften in Verbindung stehender Kolben 42, dessen eine Seite 43 über eine an die Bohrung 33 angeschlossene Leitung und dessen andere Seite 44 über eine an die Bohrung 35 angeschlossene Leitung beaufschlagbar ist. Nach Maßgabe der Beaufschlagung über die Bohrungen 33, 35 kann die Vorform geöffnet oder geschlossen werden.

Eine Ventilbaugruppe 1 ist als Baueinheit lösbar mit dem Ventilblock 7 verbunden. Zur Betätigung eines Bewegungsmechanismus über die Ventilbaugruppe 1 wird das jeweilige Vorsteuerventil 3, 5 entweder manuell durch Betätigung des Handhebels 10, 11 oder elektrisch durch eine Maschinensteuerung der I.S.-Maschine aktiviert, so dass Steuerluft zu dem jeweils ausgewählten Schaltventil gelangt, welches Arbeitsluft zu dem angesteuerten Bewegungsmechanismus leitet und damit dessen Bewegung auslöst. Hierbei anfallende Arbeitsabluft strömt über Bohrungen der Adapterplatte 9, den Ventilblock 7 über das Schaltventil in einen gemeinsamen Abluftsammelkanal.

Durch Betätigung der jeweiligen Sicherheitsventile 4, 6 und deren Verriegelung wird eine Zufuhr von Steuerluft zu dem jeweiligen Schaltventil unterbunden, so dass eine zufällige Ansteuerung des Bewegungsmechanismus verhindert wird.

Durch erfindungsgemäße Ventilbaugruppen werden in einfacher und insbesondere an Bauvolumen sparender Weise eine Zusammenfassung der Funktionen eines Vorsteuerventilträgers, eines Schaltventilträgers und eines Sicherheitsventilträgers erreicht sowie die Möglichkeit einer differenzierten spurweisen Unterbrechung der Steuerluft bereitgestellt.

**Bezugszeichenliste:**

| | | | |
|---|---|---|---|
| 1. | Ventilbaugruppe | 43. | Seite |
| 2. | Patronenträger | 44. | Seite |
| 2'. | Ventilträger | 45. | Bohrung |
| 3. | Vorsteuerventil | 46. | Feder |
| 4. | Sicherheitsventil | 47. | Feder |
| 5. | Vorsteuerventil | | |
| 6. | Sicherheitsventil | | |
| 7. | Ventilblock | | |
| 8. | Maschinenrahmen | | |
| 9. | Adapterplatte | | |
| 10. | Handhebel | | |
| 11. | Handhebel | | |
| 12. | Ringraum | | |
| 13. | Bohrung | | |
| 14. | Schaft | | |
| 15. | Schaltpatrone | | |
| 15'. | Schaltventil | | |
| 16. | Bohrung | | |
| 17. | Schaft | | |
| 18. | Ringraum | | |
| 19. | Bohrung | | |
| 20. | Schaltpatrone | | |
| 20'. | Schaltventil | | |
| 21. | Deckel | | |
| 22. | Kopfteil | | |
| 23. | Bohrung | | |
| 24. | Bohrung | | |
| 25. | Führungsbuchse | | |
| 26. | Führungsbuchse | | |
| 27. | Bohrung | | |
| 28. | Bohrung | | |
| 29. | Schaltknopf | | |
| 30. | Schaltknopf | | |
| 31. | Dichtring | | |
| 32. | Dichtring | | |
| 33. | Bohrtung | | |
| 34. | Bohrung | | |
| 35. | Bohrung | | |
| 36. | Bohrung | | |
| 37. | Bohrung | | |
| 38. | Bohrung | | |
| 39. | Bohrung | | |
| 40. | Bohrung | | |
| 41. | Schließzylinder | | |
| 42. | Kolben | | |

## Patentansprüche

1. Ventilbaugruppe (1) für die Steuerung eines der Bewegungsmechanismen einer I.S.-Maschine, mit wenigstens einem Vorsteuerventil (3, 5) sowie einem Schaltventil (15', 20') zum Steuern der Arbeitsluft für den Bewegungsmechanismus, mit einem, durch einen zur Befestigung sowohl des Vorsteuerventils (3, 5) als auch des Schaltventils (15', 20')) eingerichteten, einem der Bewegungsmechanismen zugeordneten modulartig handhabbaren Ventilträger (2'), **dadurch gekennzeichnet, dass** der Ventilträger (2') zusätzlich mit wenigstens einem, im Strömungspfad der Steuerluft zwischen dem Vorsteuerventil (3, 5) und dem Schaltventil (15', 20') angeordneten, aus einem, in einer Bohrung (23, 24) des Ventilträgers (2') zwischen einer eine Öffnungs- und einer eine Schließstellung darstellenden Position axial verschiebbar angeordneten Schaft (14, 17) bestehenden, über einen Schaltknopf (29, 30) zu betätigenden Sicherheitsventil (4, 6) ausgerüstet ist, dass jeweils der Öffnungs- und der Schließbewegung des Bewegungsmechanismus der I.S.-Maschine ein Schaltventil (15', 20') zugeordnet ist, und dass jeweils eine Schaltstellung des Schaltventils durch Federkraft gesichert ist.

2. Ventilbaugruppe (1) nach einem der Ansprüche 1 bis 3, **dadurch gekennzeichnet, dass** der Ventilträger (2') mit Schnittstellen zur Zuführung von Steuer- und Arbeitsluft ausgerüstet ist.

3. Ventilbaugruppe (1) nach Anspruch 1 oder 2, **dadurch gekennzeichnet, dass** das Vorsteuerventil (3, 5) wahlweise manuell oder elektrisch steuerbar eingerichtet ist.

4. Ventilbaugruppe (1) nach einem der Ansprüche 1 bis 3, **dadurch gekennzeichnet, dass** jedes Schaltventil (15', 20') durch eine austauschbar innerhalb des Ventilträgers (2') angeordnete Schaltpatrone (15, 20) gebildet ist.

5. Ventilbaugruppe (1) nach einem der Ansprüche 1 bis 4, **dadurch gekennzeichnet, dass** zumindest die Öffnungs- oder die Schließstellung eines Sicherheitsventils (4, 6) verriegelbar sind.

6. Ventilbaugruppe (1) nach einem der Ansprüche 4 oder 5, **dadurch gekennzeichnet, dass** ein Patronenträger (2) als Teil des Ventilträgers (2') einen zylindrischen, zur Aufnahme der beiden Schaltventile (15', 20') eingerichteten Raum aufweist, der an seinem einen Ende durch einen Deckel (21) und an seinem anderen Ende durch ein Kopfteil (22) abgeschlossen ist.

7. Ventilbaugruppe (1) nach Anspruch 6, **dadurch gekennzeichnet, dass** das Kopfteil (22) einen Träger sowohl für ein Vorsteuerventil (3) als auch für ein Sicherheitsventil (4) bildet.

8. Ventilbaugruppe (1) nach einem der Ansprüche 1 bis 7, **dadurch gekennzeichnet, dass** jeweils die beiden Schaltstellungen des Sicherheitsventils (4, 6) durch Federkraft gesichert ist.

9. Ventilbaugruppe (1) nach einem der Ansprüche 1 bis 8, **dadurch gekennzeichnet, dass** das Vorsteuerventil (3, 5) lösbar mit dem Ventilträger (2') in Verbindung steht.

10. Ventilbaugruppe (1) nach einem der Ansprüche 1 bis 9, **dadurch gekennzeichnet, dass** das Sicherheitsventil (4, 6) lösbar mit dem Ventilträger (2') in Verbindung steht.

## Claims

1. Valve assembly (1) for controlling one of the movement mechanisms of an I.S. machine, comprising at least one pilot valve (3, 5) as well as a switching valve (15', 20') for controlling the working air for the movement mechanism, comprising a valve carrier (2') which is arranged to fasten both the pilot valve (3, 5) and the switching valve (15', 20'), is allocated to one of the movement mechanisms and can be handled in a modular manner, **characterised in that** the valve carrier (2') is additionally equipped with at least one safety valve (4, 6) which is arranged in the flow path of the control air between the pilot valve (3, 5) and the switching valve (15', 20'), consists of a shaft (14, 17) arranged in a bore (23, 24) of the valve carrier (2') so as to be axially displaceable between a position representing an open position and a position representing a closed position, and is to be actuated via a control button (29, 30), **in that** in each case a switching valve (15', 20') is allocated to the opening and closing movement of the movement mechanism of the I.S. machine, and **in that** in each case a switching position of the switching valve is secured by spring force.

2. Valve assembly (1) as claimed in claim 1, **characterised in that** the valve carrier (2') is equipped with interfaces for supplying control air and working air.

3. Valve assembly (1) as claimed in claim 1 or 2, **characterised in that** the pilot valve (3, 5) is arranged to be controllable manually or electrically as desired.

4. Valve assembly (1) as claimed in any one of claims 1 to 3, **characterised in that** each switching valve (15', 20') is formed by a switching cartridge (15, 20) arranged in a replaceable manner inside the valve carrier (2').

5. Valve assembly (1) as claimed in any one of claims 1 to 4, **characterised in that** at least the open position or the closed position of a safety valve (4, 6) can be locked.

6. Valve assembly (1) as claimed in any one of claims 4 or 5, **characterised in that** a cartridge carrier (2) as part of the valve carrier (2') has a cylindrical space which is arranged to accommodate the two switching valves (15', 20') and is sealed at one of its ends by a cover (21) and at its other end by a head part (22).

7. Valve assembly (1) as claimed in claim 6, **characterised in that** the head part (22) forms a carrier both for a pilot valve (3) and for a safety valve (4).

8. Valve assembly (1) as claimed in any one of claims 1 to 7, **characterised in that** in each case the two switching positions of the safety valve (4, 6) are secured by spring force.

9. Valve assembly (1) as claimed in any one of claims 1 to 8, **characterised in that** the pilot valve (3, 5) is detachably connected to the valve carrier (2').

10. Valve assembly (1) as claimed in any one of claims 1 to 9, **characterised in that** the safety valve (4, 6) is detachably connected to the valve carrier (2').

## Revendications

1. Ensemble de vanne (1) pour la commande d'un des mécanismes de déplacement d'une machine I.S., avec au moins une vanne de précommande (3, 5) ainsi qu'une vanne de commutation (15', 20') pour la commande de l'air de travail pour le mécanisme de déplacement, avec un support de vanne (2') manipulable comme un module, aménagé pour la fixation non seulement de la vanne de précommande (3, 5) mais aussi de la vanne de commutation (15', 20'), associé à l'un des mécanismes de déplacement, **caractérisé en ce que** le support de vanne (2') est en outre équipé d'au moins une vanne de sécurité (4, 6) à actionner par un bouton de commutation (29, 30), agencée dans la voie d'écoulement de l'air de commande entre la vanne de précommande (3, 5) et la vanne de commutation (15', 20'), se composant d'une tige (14, 17) agencée de manière mobile axialement dans un perçage (23, 24) du support de vanne (2') entre une position représentant une position d'ouverture et une position représentant une position de fermeture, **en ce qu'**une vanne de commutation (15', 20') est associée respectivement au mouvement d'ouverture et au mouvement de fermeture du mécanisme de déplacement de la machine I.S., et **en ce que** respectivement une position de commutation de la vanne de commutation est assurée par la force de ressort.

2. Ensemble de vanne (1) selon la revendication 1, **caractérisé en ce que** le support de vanne (2') est équipé d'interfaces pour l'alimentation d'air de commande et de travail.

3. Ensemble de vanne (1) selon la revendication 1 ou 2, **caractérisé en ce que** la vanne de précommande (3, 5) est aménagée de manière à pouvoir être commandée au choix manuellement ou électriquement.

4. Ensemble de vanne (1) selon l'une quelconque des revendications 1 à 3, **caractérisé en ce que** chaque vanne de commutation (15', 20') est formée par une cartouche de commutation (15, 20) agencée de manière interchangeable dans le support de vanne (2').

5. Ensemble de vanne (1) selon l'une quelconque des revendications 1 à 4, **caractérisé en ce qu'**au moins la position d'ouverture ou la position de fermeture d'une vanne de sécurité (4, 6) peut être verrouillée.

6. Ensemble de vanne (1) selon l'une quelconque des revendications 4 ou 5, **caractérisé en ce qu'**un support de cartouche (2) présente, comme partie du support de vanne (2'), un espace cylindrique aménagé pour le logement des deux vannes de commutation (15', 20'), qui est terminé à son extrémité par un couvercle (21) et à son autre extrémité par une partie de tête (22).

7. Ensemble de vanne (1) selon la revendication 6, **caractérisé en ce que** la partie de tête (22) forme un support non seulement pour une vanne de précommande (3) mais aussi pour une vanne de sécurité (4).

8. Ensemble de vanne (1) selon l'une quelconque des revendications 1 à 7, **caractérisé en ce que** respectivement les deux positions de commutation de la vanne de sécurité (4, 6) sont fixées par la force de ressort.

9. Ensemble de vanne (1) selon l'une quelconque des revendications 1 à 8, **caractérisé en ce que** la vanne de précommande (3, 5) est en liaison de manière détachable avec le support de vanne (2').

10. Ensemble de vanne (1) selon l'une quelconque des revendications 1 à 9, **caractérisé en ce que** la vanne de sécurité (4, 6) est en liaison de manière détachable avec le support de vanne (2').
